# EUROPEAN PATENT SPECIFICATION

(11) **EP 2 397 675 B1**
(45) Date of publication and mention of the grant of the patent: **25.01.2017**
(21) Application number: 11160274.4
(22) Date of filing: 29.03.2011
(51) Int. Cl.: F02D 41/00, F02D 41/34, F02D 13/02, F02D 41/14, F02D 41/40

(54) **Internal combustion engine**
Verbrennungsmotor
Moteur à combustion interne

(30) Priority: 15.06.2010 JP 2010136487
(43) Date of publication of application: 21.12.2011
(73) Proprietor: Mitsubishi Jidosha Kogyo Kabushiki Kaisha, Tokyo 108-8410 (JP)
(72) Inventor: Tanaka, Dai, Tokyo 108-8410 (JP)
(74) Representative: Vossius & Partner Patentanwälte Rechtsanwälte mbB

(56) References cited:
- FR-A1- 2 879 258
- JP-A- H07 151 006
- JP-A- 2003 328 816
- JP-A- 2009 209 769

## Description

### Technical Field

This invention relates an internal combustion engine capable of controlling injection condition of a fuel flowing into an intake manifold, so that a performance thereof is improved without providing a fuel injection device which directly injects the fuel into a cylinder in the cylinder.

### Background Art

As an internal combustion engine, an engine is known in which a direct jet injector for directly injecting fuel into a cylinder is provided at the interior of a cylinder and a port jet injector for injecting the fuel into an intake passage is provided at the intake passage (refer to JP-A-2009-228447).

JP 2009 209769 A relates to a fuel injection device to inhibit blow-by of fuel to an exhaust gas passage during valve overlap while securing fuel injection quantity even during heavy load operation. In particular, in a port fuel injection type engine fuel in injected to an intake air passage. The fuel injection timing is controlled to inject fuel with excluding valve overlap period and dividing injection before and after the valve overlap period during a heavy load operation.

JP H07 151006 A relates to a system to prevent reduction in engine torque, degradation of fuel consumption ratio by minimizing the blowby of unburnt mixture to an exhaust port.

In the engine having the direct jet injector and the port jet injector, by directly injecting high pressure fuel from the direct jet injector into the cylinder, it is possible to concentrate an air-fuel mixture in which fuel is thick around an ignition plug. Therefore, due to a so-called stratified lean combustion, combustion is possible in a state where the air-fuel ratio is lean overall, and a remarkable reduction in the fuel consumption can be realized. Further, by using the latent heat of the vaporization of the fuel for cooling the intake air and lowering a temperature of the mixture, occurrence of knocking can be suppressed. In addition, due to the fact that air density can be increased by cooling the intake air, the intake air amount at the time of a full load is increased and the engine performance can be improved. Moreover, by directly injecting fuel from the port jet injector to the intake passage, it is possible to improve homogenization of the mixture at a driving region with a low load in which a flow of an inside the cylinder is weak and homogeneity of the mixture, is decreased.

However, in the engine having the direct jet injector and the port jet injector, a tip of the direct jet injector mounted in the cylinder is exposed to high pressure and high temperature combustion gas. Therefore, even when the fuel is injected from the port jet injector in order to promote the homogenization of the mixture, it is necessary to continuously inject the fuel from the direct jet injector for cooling the tip of the direct jet injector through the cooling action of fuel injection, and thus, the current conditions are that the fuel injection cannot be performed by only the port jet injector. Further, since a portion of the fuel injected from the direct jet injector collides against the wall of a combustion chamber and is burned in a state of being a liquid film, there is a problem in that a lot of particle materials are discharged. Further, since it is necessary to inject a high pressure fuel from the direct jet injector, a power loss in the high pressure pump may influence engine performance.

In addition, the direct jet injector needs to secure thermal resistance and pressure resistance. Further, since the tip of the direct jet injector is exposed to combustion gas, deposits are likely to accumulate due combustion products or fuel carbonization according to the driving conditions and it is necessary to establish a countermeasure against the deposits. Therefore, in the internal combustion engine having the direct jet injector, there is a problem in that the costs of a fuel injection system are increased.

### Summary of Invention

### Technical Problem

It is therefore one advantageous aspect of the present invention to provide an internal combustion engine capable of maintaining performance in a case of directly injecting fuel into a cylinder, and of obtaining a high performance by controlling conditions of fuel injection into an intake passage without installing inside a cylinder a direct jet injector directly injecting fuel into the cylinder.

It is therefore another advantageous aspect of the present invention to provide an internal combustion engine including a supercharger pressurizing intake air so as to remarkably improve the output torque, and capable of appropriately injecting fuel injected into an intake passage into a cylinder even when the pressure of the intake passage is higher compared to the pressure of an exhaust passage.

### Solution to Problem

The present invention is defined by the features of independent claim 1. Further preferred embodiments are defined in the dependent claims.

### Advantageous Effect of Invention

According to the aspect of the invention, the fuel is injected into the intake air passage by the first injection means during the intake stroke and the fuel flows into a cylinder when an intake valve is opened. Further, according to the rotation speed of the engine, load, and the fuel pressure, the fuel is injected into the intake passage by the second injection means during the exhaust stroke. The operation ratio of the first injection means and the second injection means is controlled by the injection controller.

Further, according to the aspect of the invention, in the fuel injection by the first injection means, by injecting the fuel when the intake valve is opened, attachment of the fuel to a wall surface or the like is suppressed, and a latent heat of vaporization of the fuel is used in a cooling of the intake air and not in a cooling of the wall surface having a large specific heat. Therefore, the temperature of a mixture is lowered and occurrence of knocking is suppressed, and an air density is increased and an intake air amount is increased at a time of full load. The fuel injected by the injector passes through between a valve seat and a valve head (the umbrella-shaped portion of a valve) when the intake valve is opened so as to direct the fuel into the cylinder.

Further, according to the aspect of the invention, in the fuel injection by the second injection means, since the fuel (mixture) previously mixed with air in an intake port flows into the cylinder, homogenization of the mixture is promoted in a driving region of a low load in which a flow of the inner of the cylinder is weak and homogeneity of the mixture is decreased. Moreover, since the injector is installed in the intake passage, the injector is not exposed to high pressure, high temperature combustion gas, and thus, becomes a simple configuration for which it is needless to secure a thermal resistance and a pressure resistance. Further, since it is not necessary to inject a high pressure fuel, a high pressure pump is not needed, and influence on performance due to a power loss to the pump can be decreased.

Further, according to the aspect of the invention, since a fuel injection period of the injector is set according to pressure conditions of the intake passage and the exhaust passage using the comparison means, the fuel is reliably provided into the cylinder, and deterioration in exhaust gas performance and fuel consumption can be prevented.

Therefore, since the condition of the fuel injection to the intake passage is controlled without having the direct jet injector of directly injecting the fuel into the cylinder, that is, since the ratio of the fuel injection in the intake stroke and the fuel injection in the exhaust stroke is set according to the driving conditions, the performance in the case of directly injecting the fuel into the cylinder is maintained and a high performance can be obtained. Particularly, even when the supercharger for pressurizing the intake gas is provided to remarkably improve the output torque and the pressure of the intake passage is higher as compared to the pressure of the exhaust passage, the fuel injected into the intake passage can be properly injected into the cylinder.

According to this aspect of the invention, when it is determined that the pressure of the intake passage is higher than the pressure of the exhaust passage, since the operation ratio of the intake stroke injection means is increased, the fuel injection in the exhaust stroke is decreased or lost, and a variation of the fuel, which is provided to the cylinder by a pressure difference between the intake passage and the exhaust passage, can be suppressed. Further, the fuel injected to the intake passage is reliably injected into the cylinder even when the supercharger for pressurizing the intake air is provided.

According to the aspect of the invention, when the intake valve is controlled to open before the exhaust valve closes, since the first injection means is operated after closing the exhaust valve, even though an overlap is formed in the opening periods of the exhaust valve and the intake valve, blowing of the fuel into the exhaust passage can be reliably prevented. Further, the case where the first injection means is operated after the exhaust valve closes includes a case where the first injection means is operated so that the fuel reaches a portion of the intake valve, which is in a closed state, after the exhaust valve has closed.

According to the aspect of the invention, when the intake air is pressurized by the supercharger and the pressure of the intake passage is higher than the pressure of the exhaust passage, blowing of the fuel into the exhaust passage can be reliably prevented.

According to the aspect of the invention, according to the real fuel pressure which is detected by the fuel pressure detector, the operation ratio of the first injection means and the second injection means is changed, and it is possible to perform the fuel injection which is matched according to the actual driving conditions.

According to the internal combustion engine of the invention, without having the direct jet injector of directly injecting fuel into the cylinder, it is possible to maintain a performance in a case of directly injecting fuel into the cylinder and to obtain a high performance by controlling the conditions of fuel injection into an intake passage.

Particularly, by including a supercharger pressurizing the intake air so as to remarkably improve the output torque, even when the pressure of the intake passage is higher compared to the pressure of the exhaust passage, it is possible to properly inject the fuel, which is injected into the intake passage, into the cylinder.

### Brief Description of Drawings

Fig. 1 is a schematic configuration view showing an internal combustion engine according to an embodiment of the invention.
Fig. 2 is a configuration view showing a main portion of Fig. 1.
Fig. 3 is a schematic block diagram showing functions of an injection control according to the embodiment.
Fig. 4 is a control flow chart of a fuel injection according to the embodiment.
Fig. 5 is a control flow chart of a fuel injection according to the embodiment.
Fig. 6 is a diagram showing changes over time in fuel injection conditions and valve operations according to the embodiment.

### Description of Embodiments

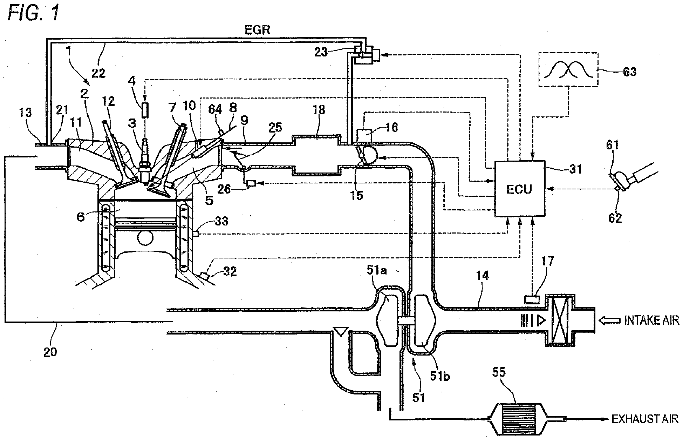

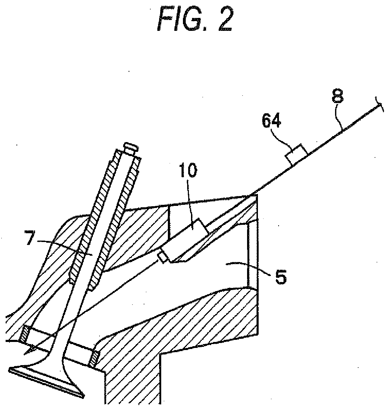

An internal combustion engine of the invention will be explained with reference to Figs. 1 and 2.

Fig. 1 shows a schematic configuration of an entire internal combustion engine according to an embodiment of the invention, and Fig. 2 shows a configuration around an intake port.

As shown in Fig. 1 and Fig. 2, for each cylinder, an ignition plug 3 is attached to a cylinder head 2 of an engine main body 1 (hereinafter, referred to as "engine") which is the internal combustion engine, and an ignition coil 4, which outputs a high voltage, is connected to the ignition plug 3. Further, an intake port 5 (an intake passage) is formed in the cylinder head 2 for each cylinder, and an intake valve 7 is respectively installed in a combustion chamber 6 side of each intake port 5. The intake valve 7 is opened and closed in following the cam of a cam shaft (not shown) which is rotated according to the rotation of the engine, and thus, allowing a communication and/or blockage between the respective intake port 5 and the combustion chamber 6.

One end of an intake manifold 9 is connected to the respective intake port 5, and the intake manifold 9 is communicated with the respective intake port 5. An electromagnetic type fuel injection valve (injector) 10 is attached to the cylinder head 2 or the intake manifold 9, and the fuel is provided from a fuel tank to the injector 10 via a fuel pipe 8.

Moreover, an exhaust port 11 is formed in the cylinder head 2 for each cylinder, and an exhaust valve 12 is respectively installed at the combustion chamber 6 side of the respective exhaust port 11. The exhaust valve 12 is opened and closed in accordance with the cam of the cam shaft (not shown) which is rotated according to the rotation of the engine, and thus, allows a communication and/or blockage between the respective exhaust port 11 and the combustion chamber 6. Further, one end of an exhaust manifold 13 is connected to the respective exhaust port 11, and the exhaust manifold 13 is communicated with the respective exhaust port 11.

In addition, since the engine is known, detailed description of the configuration thereof is omitted.

In the upstream side of the injector 10, an intake tube 14 is connected to the intake manifold 9, and an electromagnetic-type throttle valve 15 is attached to the intake tube 14, and a throttle position sensor 16, which detects the valve opening degree of the throttle valve 15, is installed. Further, amount of foot application to an accelerator 61 is detected by an accelerator position sensor 62, and the throttle valve 15 is operated based on the detection information of the accelerator position sensor 62.

On the upstream side of the throttle valve 15, an air flow sensor 17 for measuring an intake air amount is installed. As the air flow sensor 17, a Karman vortex type or hot film type air flow sensor may be used. Further, a surge tank 18 is installed in the intake tube 14 between the intake manifold 9 and the throttle valve 15.

An exhaust tube 20 is connected to the other end of the exhaust manifold 13, and an exhaust gas recirculation port (EGR port) 21 branches to the exhaust manifold 13. One end of the EGR tube 22 is connected to the EGR port 21, and the other end of the EGR tube 22 is connected to the intake tube 14 of the upper stream portion of the surge tank 18. An EGR valve 23 is installed in the EGR tube 22 which is near to the surge tank 18. By opening the EGR valve 23, a part of the exhaust gas is introduced to the intake tube 14 of the upper stream portion of the surge tank 18 via the EGR tube 22.

As a result, the EGR tube 22 and the EGR valve 23 constitute an exhaust gas recirculation means (EGR unit). The EGR unit is a device for refluxing a part of the exhaust gas to an intake system of the engine 1 (surge tank 18), for lowering the combustion temperature within the combustion chamber 6 of the engine 1, and for reducing the exhaust amount of nitrogen oxide (NOₓ). Therefore, a part of the exhaust gas is refluxed to the intake system as a part of the EGR gas by a predetermined EGR ratio according to the opening degree of the opening and closing operation of the EGR valve 23.

Moreover, by refluxing the exhaust gas to the intake system of the engine 1 using the EGR unit, it is possible to decrease the air amount which is restricted by the throttle valve 15, that is, it is possible to reduce a throttling loss of the throttle valve 15 without much inflow of air even when the throttle valve 15 is opened. Further, it is possible to cause turbulence to occur in the intake air inflowing to the combustion chamber 6 even at a low speed and low rotation region.

Meanwhile, a turbulence flap 25 is installed in the intake manifold 9, and the turbulence flap 25 is opened and closed by an actuator 26 such as a negative pressure actuator. The turbulence flap 25 is constituted by an opening and closing-type valve such as a butterfly valve or a shutter valve, and, as shown in Fig. 1, the turbulence flap 25 opens and closes a lower half of the intake passage. That is, by closing the turbulence flap 25, an opening portion is formed in the upper side of an intake passage cross section. Therefore, by narrowing the cross section of the intake passage, a vertical turbulence stream occurs in the inner portion of the combustion chamber 6.

Moreover, a supercharger 51 is provided at the intake tube 14 of the upper portion of the surge tank 18. The supercharger 51 causes the exhaust gas of the engine 1 to rotate an exhaust turbine 51a which is installed at the exhaust manifold 13. Further, through operation of an intake compressor 51 b which is directly connected to the exhaust turbine 51a, the air is pressurized and the volume density of the air is increased. Therefore, the air, which is pressurized and has an increased volume density, is sent to the combustion chamber 6. As a result, the intake air is supercharged and the output torque can be increased.

Moreover, as the supercharger 51, the exhaust turbine type supercharger is shown. But, it is possible to adopt a supercharger which is operated by power transmitted from the output shaft of the engine 1 or a supercharger which is operated by the power of an electric actuator. In addition, the supercharger 51 may be a supercharger which drives a compressor by driving force from a crank or a turbocharger which drives the compressor with an exhaust air flow.

An exhaust purification catalyst 55 is interposed and mounted in the exhaust tube 20 connected to the exhaust manifold 13, and the exhaust gas is purified by the exhaust purification catalyst 55. The exhaust purification catalyst 55 is, for example, a three way catalyst. For example, by means of the exhaust purification catalyst 55, when an exhaust air-fuel ratio is near to an stoichiometric air-fuel ratio (stoichiometric ratio), hydrocarbons (HC) or carbon monoxide (CO), nitrogen oxide (NOₓ), and the like, which are contained in the exhaust gas, are purified. Further, when the exhaust air-fuel ratio becomes an oxidization atmosphere (a lean air-fuel ratio), HC or CO is oxidized and purified, and oxygen (O₂) is stored until the exhaust air-fuel ratio becomes a reduction atmosphere (a rich air-fuel ratio). Further, when the exhaust air-fuel ratio becomes a rich air-fuel ratio, NOₓ is reduced and purified, and the stored O₂ is discharged. Then, HC or CO is oxidized and purified.

In the engine 1, a variable valve mechanism 63, which arbitrarily changes a lifting amount and a lifting time of the intake valve 7 and the exhaust valve 12 (a valve operating state), is provided. Therefore, due to the fact that the phase of the cam is changed by the variable valve mechanism 63, the operating states of the intake valve 7 and the exhaust valve 12 are arbitrarily set. For example, the intake valve 7 is opened before the exhaust valve 12 closes, and an overlap is formed in the opening period of the exhaust valve 12 and the intake valve 7.

By forming the overlap during the opening period of the exhaust valve 12 and the intake valve 7, a part of the intake air is blown to the exhaust air. Therefore, the exhaust gas flow rate is increased and the exhaust gas amount flowing into the exhaust turbine 51 a is increased, and a supercharged pressure can be increased by the supercharger 51. Further, by having a large overlap in the valve opening period of the exhaust valve 12 and the intake valve 7 even though the supercharged pressure is constant, the remaining gas within the cylinder is removed and the fresh air amount is increased, and thus, the torque can be increased.

Moreover, a fuel pressure sensor 64, which detects the pressure of the fuel provided at the injector 10, is provided in the fuel pipe 8. Further, the engine 1 includes a crank angle sensor 32 for detecting the crank angle and obtaining the engine rotation speed (Ne), and a water temperature sensor 33 for detecting a cooling water temperature.

The ECU (electronic control unit) 31 includes an input and output unit, a memory unit (ROM, RAM and the like), a central processing unit (CPU), a timer counter, and the like. Therefore, the engine 1 is comprehensively controlled by the ECU 31.

Various sensors such as the throttle position sensor 16, the air flow sensor 17, the crank angle sensor 32, the water temperature sensor 33, the accelerator position sensor 62, and the fuel pressure sensor 64 are connected to an input side of the ECU 31, and detection information detected from the sensors is input to the input side of the ECU 31. Further, information of the variable valve mechanism 63 is input to the ECU 31, and information of the lifting amount and the lifting period of the intake valve 7 and the exhaust valve 12 is sent to the ECU 31.

Meanwhile, various output devices such as the ignition coil 4, the throttle valve 15, the driving unit of the injector 10, the EGR valve 23, the actuator 26 of the turbulence flap 25 and the variable valve mechanism 63 are connected to the output side of the ECU 31. From the various output devices, a fuel injection amount which is calculated by the ECU 31 based on the detection information detected from the various sensors, a fuel injection period,
an ignition time, an operating time and operating amount of the EGR valve 23, an operating time of the turbulence flap 25, an operating state of the intake valve 7 and the exhaust valve 12 (valve operating state), and the like are respectively output.

The air-fuel ratio is set to a proper target air-fuel ratio based on the detection information detected from the various sensors, and a fuel amount according to the target air-fuel ratio is injected from the injector 10 at a suitable timing. Further, the throttle valve 15 is adjusted to a suitable opening degree, and a spark ignition is performed at a suitable timing by the ignition plug 3.

In the engine 1 of the embodiment, the fuel is injected from the injector 10 during the intake stroke and the fuel is injected from the injector 10 during the exhaust stroke. Further, if the intake valve 7 is opened when the fuel injected reaches the vicinity of the intake valve 7, it is defined to be an intake stroke injection. Also, the case before the intake valve 7 is opened is defined to be exhaust stroke injection. However, actually, time delays such as an opening delay of an injector needle valve until the fuel reaches the vicinity of the intake valve 7 due to a driving command of the injector or a transporting delay from the injector 10 to the intake valve 7 are present. Therefore, the injector driving command of the intake stroke injection is performed during the exhaust stroke in some cases.

By injecting the fuel during the intake stroke in which the intake valve 7 is opened, attachment of the fuel to such as the intake port 5 or the umbrella portion of the intake valve 7 is suppressed, and the latent heat of vaporization of the fuel can be used in the cooling of the intake air.

Therefore, the temperature of the mixture is lowered and the occurrence of knocking is suppressed, and the intake gas amount at the time of the full load is increased by increasing the air density. Therefore, it is possible to achieve the cooling effect of the intake gas to a maximum extent even in the case of the port injection.

As shown in Fig. 2, the fuel injection by the injector 10 is performed so that the fuel passes through between the valve seat of the intake port 5 and the valve head of the intake valve 7 when the intake valve 7 is opened and the fuel is directed into the combustion chamber 6. In this case, by pinching the valve shaft and eccentrically locating the fuel at the upper side in the drawing, it is possible to increase the turbulence stream in the combustion chamber 6 by the flow induced from the fuel injection. Further, by pinching the valve shaft and eccentrically locating the fuel in any one of the left direction or the right direction, it is possible to increase a swirl current in the combustion chamber 6.

By injecting the fuel from the injector 10 during the exhaust stroke, the mixture is obtained in which the fuel and the air is sufficiently homogenized and mixed in an inner portion of the intake port 5. Since the injector 10 is installed in the intake port 5, the injector 10 is not exposed to the high temperature and high pressure combustion gas, and a simple attaching configuration is obtained without the necessity for securing of thermal resistance and pressure resistance. Further, due to the fact that it is not necessary to inject high pressure fuel, it is possible to minimize the influence on performance due to power loss in the pump.

Therefore, without having the direct jet injector for directly injecting the fuel into the cylinder, by controlling the fuel injection to the intake passage, that is, by setting the ratio of the fuel injection in the intake stroke and the fuel injection in the exhaust stroke according to the driving conditions, the performance in the case where the fuel is directly injected into the cylinder is maintained, and it is possible to obtain a high performance.

The ratio of the fuel injection during the intake stroke and the fuel injection during the exhaust stroke is set by the injection control means of the ECU 31 according to the driving conditions of the engine 1.

Moreover, when the overlap is formed in the opening period of the exhaust valve 12 and the intake valve 7, it is possible to increase the supercharged pressure of the supercharger 51 by increasing the exhaust gas flow rate, and it is possible to increase the torque by increasing the fresh air amount due to the removal of remaining gas within the cylinder. At this time, when the fuel injection is performed during the exhaust stroke, the fuel also is blown into the exhaust passage, and thus, it is considered that deterioration of the exhaust gas performance or the fuel efficiency occurs.

Therefore, in the embodiment, by comparing the pressure of the intake passage and the pressure of the exhaust passage, when the intake gas is supercharged from the supercharger 51 and the pressure of the intake passage is higher than the pressure of the exhaust passage, the fuel injection period is set to a state where the fuel is not blown into the exhaust passage. As a result, when it is determined that the pressure of the intake passage is higher than the pressure of the exhaust passage, the fuel is injected at the intake stroke, and the injection of the fuel in the exhaust stroke is decreased or lost. Therefore, blowing of the fuel into the exhaust passage is prevented. Further, due to the fact that the fuel is injected at the intake stroke after the exhaust valve 12 is closed, blowing of the fuel into the exhaust passage is reliably prevented.

The engine in which the supercharger is installed is shown in the embodiment, but the embodiment of the invention is also effective in a natural intake engine, without a supercharger, in which the pressure of the intake passage becomes higher than the pressure of the exhaust passage. Further, the effect preventing the fuel blowing due to the injection of fuel in the intake stroke is also effective in an engine in which the fuel is blown into the exhaust passage due to the fact that the pressure of the intake passage is lower than the pressure of the exhaust passage or the momentum of the fuel is high.

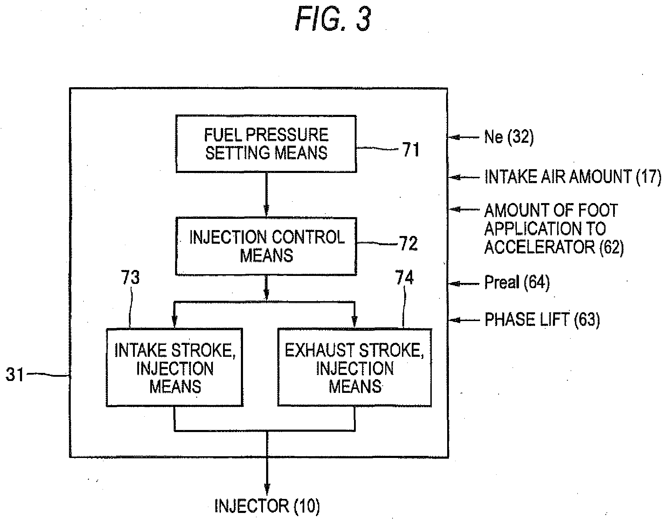

Next, specific control conditions will be explained with reference to Figs. 3 to 6.

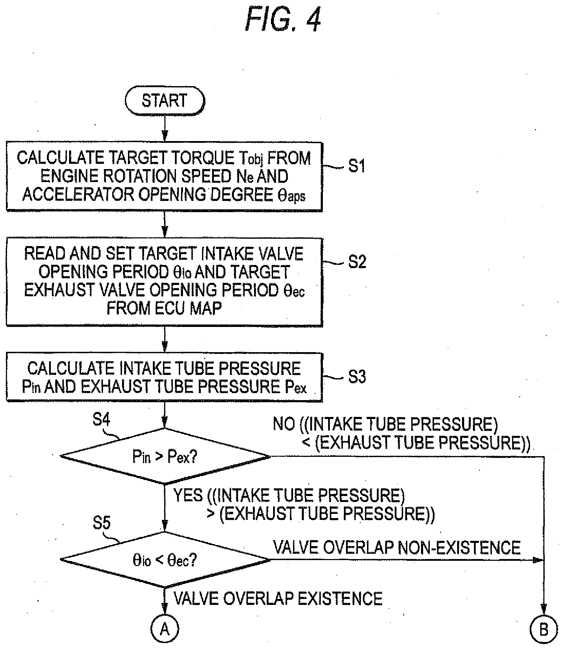

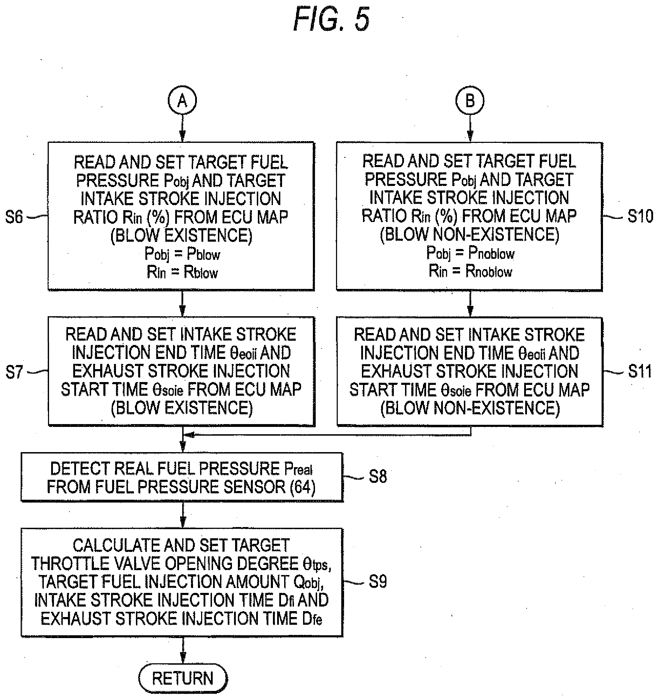

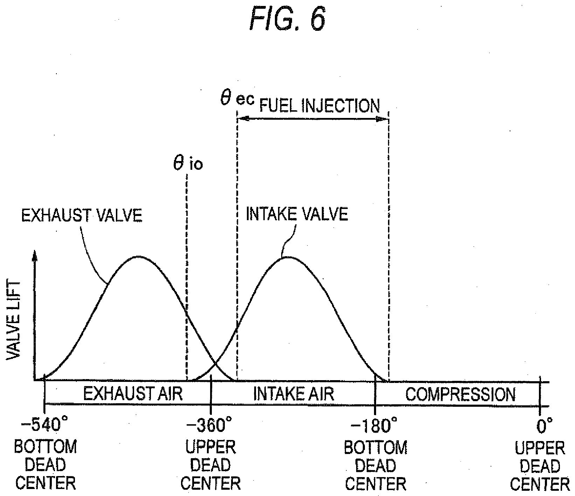

Fig. 3 is a schematic block diagram illustrating function of the injection control, and Figs. 4 and 5 are flowcharts illustrating conditions of the fuel injection performed by the injection control means, and Fig. 6 is a diagram illustrating changes over time of fuel injection conditions and valve operation.

As shown in Fig. 3, the engine rotation speed (Ne) from the detection information of the crank angle sensor 32, detection information of the air flow sensor 17, detection information of the accelerator position sensor 62, the actual fuel pressure (Pᵣₑₐₗ) from the detection information of the fuel pressure sensor 64, and phase lift information (pulse phase, valve lift) from the information of the variable valve mechanism 63 are input to the ECU 31.

The ECU 31 includes a fuel pressure setting means 71 which sets a fuel pressure (a target fuel pressure: P_{obj}) according to the engine rotation speed (Ne) of the engine 1 and the load (the intake amount or the like), and the target fuel pressure (P_{obj}) set at the fuel pressure setting means 71 is sent to an injection control means 72 (an injection controller). In the injection control means 72, the ratio of the fuel injection in the intake stroke injection and the fuel injection in the exhaust stroke injection is set according to the target fuel pressure (P_{obj}), the engine rotation speed (Ne) of the engine 1 and the load (the intake gas amount and the like).

In the injection control means 72, a pressure of the intake tube 14 (intake port 5) is compared with a pressure of the exhaust tube 20 (the exhaust port 11). Here, when the air is supercharged by the supercharger 51 and the pressure of the intake tube 14 is higher than the pressure of the exhaust tube 20, the fuel injection period of the injector 10 is set to a state in which the fuel is injected at the intake stroke so that the fuel is not blown into the exhaust port 11.

Moreover, the ECU 31 includes an intake stroke injection means 73 (a first injection means) for injecting the fuel from the injector 10 during the intake stroke and an exhaust stroke injection means 74 (a second injection means) for injecting the fuel from the injector during the exhaust stroke. The driving command is sent from the intake stroke injection means 73 and the exhaust stroke injection means 74 to the injector 10, and the fuel of a predetermined amount is injected at a predetermined stroke time.

Information of the proportion between the fuel injection in the intake stroke injection and the fuel injection in the exhaust stroke injection, which are set by the injection control means 72, is sent to the intake stroke injection means 73 and the exhaust stroke injection means 74. Further, the driving command is sent from the intake stroke injection means 73 and the exhaust stroke injection means 74 to the injector 10 according to the ratio information.

Next, specific processing conditions will be explained with reference to Figs. 4 to 8.

As shown in Fig. 4, if processing is started, a target torque (T_{obj}) is calculated from the engine rotation speed (Ne) and the accelerator opening degree (θₐₚₛ) in step S1. In step S2, a target intake valve opening period (θᵢₒ) and a target exhaust valve closing period (θ_{ec}) are read and set from the ECU map. In step S3, an intake tube pressure (Pᵢₙ), which is a pressure of the intake passage, and an exhaust tube pressure (Pₑₓ), which is a pressure of the exhaust passage, are read. The intake tube pressure (Pᵢₙ) and the exhaust tube pressure (Pₑₓ) may be detection information detected by the pressure sensor, and may be a value (estimated value) calculated by the ECU 31 based on the detection information of the air flow sensor 17, and the like.

In step S4, it is determined whether or not the intake tube pressure (Pᵢₙ) is more than the exhaust tube pressure (a comparison means). When it is determined that the intake tube pressure (Pᵢₙ) is more than the exhaust tube pressure (Pᵢₙ>Pₑₓ) in step 4, in step 5, it is determined whether or not the target intake valve opening period (θᵢₒ) is smaller than the target exhaust closing period (θ_{ec}). In this case, when a pressurization top dead center of a piston is 0°, an intake bottom dead center is -180°, an intake top dead center is -360°, and an exhaust bottom dead center is -540°, a measurement of an angle value of the target intake valve opening period (θᵢₒ) is compared with a measurement of angle value of the target exhaust valve closing period (θ_{ec}).

In step S5, when it is determined that the target intake valve opening period (θᵢₒ) is smaller than the target exhaust valve closing period (θ_{ec}), that is, as shown in Fig. 6, when it is determined that the target intake valve opening period (θᵢₒ) is shorter than the target exhaust valve closing period (θ_{ec}), it is determined that the overlap is formed in the opening periods of the intake valve 7 and the exhaust valve 12. Thus, proceeding to the flow chart (A) of Fig. 5, the fuel injection period of the injector 10 in a state where the fuel is injected at the intake stroke is set so that the fuel is not blown to the exhaust port 11.

The detail of the above matter will be hereinafter described in the flowchart of Fig. 5. However, regarding the above matter, briefly, when the pressure of the intake passage is higher than the pressure of the exhaust passage due to facts, such as that the intake gas is supercharged by the supercharger 51, the fuel is injected at the intake stroke, the fuel injection injected at the exhaust stroke is decreased or lost, and there is control to prevent blowing of the fuel into the exhaust passage. Further, the fuel is injected at the intake stroke after the exhaust valve 12 is closed, and there is control in order to reliably prevent blowing of the fuel blown into the exhaust passage.

Meanwhile, in step S4, when it is determined that the intake tube pressure (Pᵢₙ) is lower than the exhaust tube pressure (Pₑₓ), that is, when it is determined that the intake tube pressure (Pᵢₙ) is less than the exhaust tube pressure (Pₑₓ), the process proceeds to the flowchart (B) of Fig. 5, and the fuel injection period of the injector 10 is set such that fuel is not blown into the exhaust port 11.

Moreover, in step S5, when it is determined that the target intake valve opening period (θᵢₒ) is not smaller than the target exhaust closing time (θ_{ec}), that is, when it is determined that the target intake valve opening period (θᵢₒ) is greater than the target exhaust valve closing period (θ_{ec}), it is determined that the intake tube pressure (Pᵢₙ) is high or the overlap is not formed in the opening periods of the exhaust valve 12 and the intake valve 7. Then, the process proceeds to the flowchart (B) of Fig. 5, and the fuel injection period of the injector 10 is set such that the fuel is not blown into the exhaust port 11.

Moreover, the detail of the above matter will be hereinafter described in the flowchart of Fig. 5. However, regarding the above matter, briefly, the ratio of injection during the intake stroke decrease, and there is control so that the fuel is injected in the intake stroke and the exhaust stroke according to the driving conditions.

In step S5, when it is determined that the target intake valve opening period (θᵢₒ) is smaller than the target exhaust valve closing period (θ_{ec}), the intake tube pressure (Pᵢₙ) is more than the exhaust tube pressure (Pₑₓ), and the overlap is formed in the opening periods of the exhaust valve 12 and the intake valve 7, and then, the process proceeds to step S6 of the flowchart of Fig. 5(A). In step S6, a target fuel pressure (P_{obj}) and a target intake stroke injection proportion (Rᵢₙ:%) is read and set from the ECU map. The target intake stroke injection ration (Rᵢₙ:%) is 100%, that is, it may be preferable that the fuel injection in the exhaust stroke is lost by performing only the intake stroke injection.

At this time, the ECU map is a map which is set according to the condition in which the fuel is blown into the exhaust port 11, and the target fuel pressure (P_{obj}) is set as P_{blow}. As described below, the P_{blow} is set to a value, which is more than a fuel pressure (P_{noblow}) of the map in a condition in which the fuel is not blown into the exhaust port 11 P_{blow}>P_{noblow}). Further, the target intake stroke injection ratio (Rᵢₙ) is set as R_{blow}. As described below, R_{blow} is set to a value, which is more than the intake stroke injection ratio (R_{noblow}) of a map of a condition in which the fuel is not blown into the exhaust port 11 (R_{blow}>R_{noblow}).

In step S7, an intake stroke injection end time (θₑₒᵢᵢ) and the exhaust stroke injection start time (θₛₒᵢₑ) are read and set from the ECU map. At this time, the ECU map is a map which is set according to a condition in which the fuel is blown into the exhaust port 11. In the fuel injection, the intake stroke injection end time (θₑₒᵢᵢ) and the exhaust stroke injection start time (θₛₒᵢₑ) are fixed, and the intake stroke injection start time (θₛₒᵢᵢ) and the exhaust stroke injection end time (θₑₒᵢₑ) are variable.

For example, as shown in Fig. 6, the fuel injection in the exhaust stroke is lost by performing only the intake stroke injection, and it is preferable that the injection time of the intake stroke is performed after the exhaust valve 12 is closed. That is, it is preferable that the intake stroke injection start time (θₛₒᵢᵢ) is later than or equal to the opening time of the exhaust valve 12 (θ_{ec}). Herewith, the fuel is injected at the intake stroke when the intake valve 7 is opened after the exhaust valve 12 is closed, and the fuel flows into the cylinder without attaching to the wall surface. Therefore, it is reliably prevented that the fuel is blown into the exhaust passage.

Next, the process proceeds to step S8, and the actual fuel pressure (Pᵣₑₐₗ) is detected from the fuel pressure sensor 64. Then, in step S9, a target throttle valve opening degree (θₜₚₛ) and a target fuel injection amount (Q_{obj}), an intake stroke injection period (D_{fi}) and an exhaust stroke injection period (D_{fe}) are calculated and set, and returned. As a result, the fuel injection of the intake stroke and the fuel injection of the exhaust stroke are controlled according to the real fuel pressure (Pᵣₑₐₗ) so that the fuel is not blown into the exhaust passage.

Meanwhile, in step S4 of the flowchart shown in Fig. 4, when it is determined that the intake tube pressure (Pᵢₙ) is lower than the exhaust tube pressure (Pₑₓ), the process proceeds to step S10 of the flowchart of Fig. 5. Further, in step S5, when it is determined that the target intake valve opening period (θᵢₒ) is not smaller than the target exhaust valve closing period (θₑₒ), the overlap is not formed in the opening periods of the exhaust valve 12 and the intake valve 7, and the process proceeds to step 10 of the flowchart (B) of Fig. 5.

As shown in Fig. 5, in step S10, the target fuel pressure (P_{obj}) and the target intake stroke injection ratio (Rᵢₙ:%) are read and set from the ECU map. At this time, the ECU map is a map which is set according to a condition in which the fuel is not blown into the exhaust port 11, and the target fuel pressure (P_{obj}) is set as P_{noblow}. As described above, P_{noblow} is set to a value, which is less than the fuel pressure (P_{blow}) of a map in a condition in which the fuel is blown into the exhaust port 11 (P_{blow}>P_{noblow}). Further, the target intake stroke injection ratio (Rᵢₙ) is set as R_{noblow}. As described above, the R_{noblow} is set to a value which is less than the intake stroke injection ratio (R_{blow}) of a map in a condition in which the fuel is blown into the exhaust port 11 (R_{blow}>R_{noblow}).

In step S11, an intake stroke injection end time (θₑₒᵢᵢ) and the exhaust stroke injection start time (θₛₒᵢₑ) are read and set from the ECU map. At this time, the ECU map is a map which is set according to a condition in which the fuel is not blown into the exhaust port 11. In the fuel injection, the intake stroke injection end time (θₑₒᵢᵢ) and the exhaust stroke injection start time (θₛₒᵢₑ) are fixed, and the intake stroke injection start time (θₛₒᵢᵢ) and the exhaust stroke injection end time (θₑₒᵢₑ) are variable.

Next, the process proceeds to step S8, and the actual fuel pressure (Pᵣₑₐₗ) is detected from the fuel pressure sensor 64. Then, in step S9, the target throttle valve opening (θₜₚₛ) and the target fuel injection amount (Q_{obj}), the intake stroke injection period (D_{fi}) and the exhaust stroke injection period (D_{fe}) are calculated and set, and returned. As a result, in the state where the fuel is not blown into the exhaust passage, the fuel injection in the intake stroke and the fuel injection in the exhaust stroke are controlled according to the real fuel pressure (Pᵣₑₐₗ).

In the engine 1 as described above, since the condition of the fuel injection from the injector 10 to the intake passage and the fuel pressure are controlled without having the direct jet injector directly injecting fuel into the cylinder, that is, the ratio between the fuel injection in the intake stroke and the fuel injection in the exhaust stroke and the fuel pressure is set according to the driving conditions, and there is optimization of the exhaust gas, the fuel efficiency and the output is realized.

Therefore, in the high load region, it is possible to obtain a high performance such as maintaining an intake air cooling state and a state of improved filling efficiency in the case where the fuel is directly injected into the cylinder by injecting the fuel at the intake stroke, and suppressing knocking, and the like. Further, in the low load region, with a state where power loss in the fuel pump is reduced, it is possible to prevent a mixing deterioration by injecting the fuel to the intake passage at the exhaust stroke.

Moreover, when it is determined that the pressure of the intake passage is higher than the pressure of the exhaust passage due to facts such that intake gas is supercharged by the supercharger 51, the fuel is injected at the intake stroke, the fuel injection injected at the exhaust stroke is decreased or lost, and the fuel is not blown into the exhaust passage. Further, the fuel is injected at the intake stroke after the exhaust valve 12 is closed, and it is possible to reliably prevent blowing of fuel into the exhaust passage.

Therefore, even when having the supercharger 51 for pressurizing the intake gas so as to remarkably improve the output torque, and if the pressure of the intake passage is higher as compared to the pressure of the exhaust passage, and if a large overlap is set for the opening periods of the intake valve 7 and the exhaust valve 12, it is possible to suitably inject the fuel injected to the intake passage into the cylinder. Therefore, it is possible to prevent deterioration in the exhaust gas performance or the fuel efficiency which occurs due to the fact that non-combusted fuel is blown into the intake passage.

The invention can be used in the industrial field of an internal combustion engine in which the performance can be improved without directly injecting fuel into a cylinder by controlling the conditions of fuel injection into an intake passage.

## Claims

1. An internal combustion engine (1), comprising:
an intake passage (5) with an intake valve (7) and an exhaust passage (11) with an exhaust valve (12);
an injector (10) that injects a fuel into the intake passage (5);
a first injection means (73) adapted to control the injection of the fuel from the injector (10) in an intake stoke;
a second injection means (74) adapted to control the injection of the fuel from the injector (10) in an exhaust stroke;
a comparison means that compares a pressure in the intake passage (5) and a pressure in the exhaust passage (11);
a fuel pressure setting means (71) which sets a target fuel pressure (P_{obj}) according to a rotation speed (Ne) of the engine (1) and a load of the engine (1); and
an injection controller (72) that sets an operation ratio of fuel injection of the first injection means (73) and fuel injection of the second injection means (74), according to the target fuel pressure, the rotation speed (Ne) of the internal combustion engine, a load of the internal combustion engine, and conditions of the pressures obtained by the comparison means, so that a driving command is sent from the first injection means (73) and the second injection means (74) to the injector (10) according to the operation ratio,
wherein a condition in which the fuel is blown into the exhaust passage (11) is obtained in a case when the comparison means determines that the pressure of the intake passage (5) is higher than the pressure of the exhaust passage (11) and
when it is determined by a determination means that a target intake valve opening period (θᵢₒ) is smaller than a target exhaust valve closing period (θ_{ec}), that is, when it is determined that the overlap is formed in the opening periods of the intake valve (7) and the exhaust valve (12),
in the condition, the target fuel pressure (P_{obj}) is set as a pressure value (P_{blow}), which is more than a fuel pressure (P_{noblow}) in a condition in which the fuel is not blown into the exhaust port (P_{blow} > P_{noblow}), and
a target intake stroke injection ratio (Rᵢₙ) is set as a ratio value (R_{blow}), which is more than an intake stroke injection ratio (R_{noblow}) of a condition in which the fuel is not blown into the exhaust port (R_{blow} > R_{noblow}).

2. The internal combustion engine according to Claim 1, further comprising:
a valve controller that controls at least a timing when an exhaust valve (12) is closed and a timing when an intake valve (7) is opened,
wherein the injection controller (72) operates the first injection means (73) after closing the exhaust valve (12), in a state where the intake valve (7) is controlled to be opened before closing the exhaust valve (12) by the valve controller.

3. The internal combustion engine according to any one of Claims 1 to 2,
wherein the injection controller sets a fuel injection period of the injector (10) so that the fuel is not blown into the exhaust passage in a state where an intake air is pressurized.

4. The internal combustion engine according to any one of Claims 1 to 3, further comprising:
a fuel pressure detector that detects a fuel pressure,
wherein the injection controller (72) sets an injection amount of the fuel based on an actual fuel pressure which is detected by the fuel pressure detector.

## Patentansprüche

1. Verbrennungsmotor (1) mit:
einem Einlasskanal (5) mit einem Einlassventil (7) und einem Auslasskanal (11) mit einem Auslassventil (12);
einer Einspritzdüse (10), die einen Kraftstoff in den Einlasskanal (5) einspritzt;
einer ersten Einspritzeinrichtung (73), die dazu geeignet ist, die Kraftstoffeinspritzung von der Einspritzdüse (10) in einem Ansaugtakt zu steuern;
einer zweiten Einspritzeinrichtung (74), die dazu geeignet ist, die Kraftstoffeinspritzung von der Einspritzdüse (10) in einem Ausstoßtakt zu steuern;
einer Vergleichseinrichtung, die einen Druck im Einlasskanal (5) mit einem Druck im Auslasskanal (11) vergleicht;
einer Kraftstoffdrucksetzeinrichtung (71), die einen Soll-Kraftstoffdruck (P_{obj}) gemäß einer Drehzahl (Ne) des Motors (1) und einer Last des Motors (1) setzt; und
einer Einspritzsteuereinheit (72), die ein Betriebsverhältnis zwischen der Kraftstoffeinspritzung der ersten Einspritzeinrichtung (73) und der Kraftstoffeinspritzung der zweiten Einspritzeinrichtung (74) gemäß dem Soll-Kraftstoffdruck, der Drehzahl (Ne) des Verbrennungsmotors, einer Last des Verbrennungsmotors und durch die Vergleichseinrichtung erhaltenen Druckbedingungen setzt, so dass von der ersten Einspritzeinrichtung (73) und der zweiten Einspritzeinrichtung (74) ein Steuerbefehl gemäß dem Betriebsverhältnis an die Einspritzdüse (10) übertragen wird,
wobei eine Bedingung, bei der der Kraftstoff in den Auslasskanal (11) eingespritzt wird, erhalten wird, wenn die Vergleichseinrichtung bestimmt, dass der Druck des Einlasskanals (5) höher ist als der Druck des Auslasskanals (11), und wobei,
wenn eine Bestimmungseinrichtung bestimmt, dass ein Sollwert der Einlassventilöffnungsdauer (θᵢₒ) kleiner ist als ein Sollwert der Auslassventilschließdauer (θ_{ec}), d.h., wenn bestimmt wird, dass in den Öffnungsdauern des Einlassventils (7) und des Auslassventils (12) eine Überlappung vorliegt,
unter der Bedingung:
der Soll-Kraftstoffdruck (P_{obj}) als ein Druckwert (P_{blow}) gesetzt wird, der größer ist als ein Kraftstoffdruck (P_{noblow}) für einen Zustand, in dem der Kraftstoff nicht in den Auslasskanal eingespritzt wird (P_{blow} > P_{noblow}), und
ein Sollwert des Ansaugtakt-Einspritzverhältnisses (Rᵢₙ) als ein Verhältniswert (R_{blow}) gesetzt wird, der größer ist als ein Ansaugtakt-Einspritzverhältnis (R_{noblow}) für einen Zustand, in dem der Kraftstoff nicht in den Auslasskanal eingespritzt wird (R_{blow} > R_{noblow}).

2. Verbrennungsmotor nach Anspruch 1, ferner mit:
einer Ventilsteuereinheit, die mindestens eine Zeitdauer steuert, während der ein Auslassventil (12) geschlossen ist, und eine Zeitdauer, während der ein Einlassventil (7) geöffnet ist,
wobei die Einspritzsteuereinheit (72) die erste Einspritzeinrichtung (73), nachdem das Auslassventil (12) geschlossen wurde, in einem Zustand betreibt, in dem das Einlassventil (7) auf den offenen Zustand gesteuert wird, bevor das Auslassventil (12) durch die Ventilsteuereinheit geschlossen wird.

3. Verbrennungsmotor nach Anspruch 1 oder 2, wobei die Einspritzsteuereinheit eine Kraftstoffeinspritzdauer der Einspritzdüse (10) derart einstellt, dass in einem Zustand, in dem Ansaugluft unter Druck gesetzt ist, kein Kraftstoff in den Auslasskanal eingespritzt wird.

4. Verbrennungsmotor nach einem der Ansprüche 1 bis 3, ferner mit:
einem Kraftstoffdruckdetektor, der einen Kraftstoffdruck erfasst,
wobei die Einspritzsteuereinheit (72) eine Kraftstoffeinspritzmenge basierend auf einem durch den Kraftstoffdruckdetektor erfassten aktuellen Kraftstoffdruck einstellt.

## Revendications

1. Moteur à combustion interne (1), comprenant :
un passage d'admission (5) pourvu d'une soupape d'admission (7) et d'un passage d'échappement (11) pourvu d'une soupape d'échappement (12) ;
un injecteur (10) qui injecte un carburant dans le passage d'admission (5) ;
un premier moyen d'injection (73) adapté à commander l'injection du carburant de l'injecteur (10) dans une course d'admission ;
un deuxième moyen d'injection (74) adapté à commander l'injection du carburant de l'injecteur (10) dans une course d'échappement ;
un moyen de comparaison qui compare une pression dans le passage d'admission (5) et une pression dans le passage d'échappement (11) ;
un moyen de réglage de pression de carburant (71) qui règle une pression de carburant cible (P_{obj}) en fonction d'une vitesse de rotation (Ne) du moteur (1) et d'une charge du moteur (1) ; et
un dispositif de commande d'injection (72) qui règle un rapport de fonctionnement de l'injection de carburant du premier moyen d'injection (73) et de l'injection de carburant du deuxième moyen d'injection (74), en fonction de la pression de carburant cible, de la vitesse de rotation (Ne) du moteur à combustion interne, d'une charge du moteur à combustion interne, et des conditions des pressions obtenues par le moyen de comparaison, de sorte qu'une commande d'entraînement est envoyée du premier moyen d'injection (73) et du deuxième moyen d'injection (74) à l'injecteur (10) en fonction du rapport de fonctionnement,
dans lequel une condition dans laquelle le carburant est insufflé à l'intérieur du passage d'échappement (11) est obtenue dans un cas dans lequel le moyen de comparaison détermine que la pression du passage d'admission (5) est supérieure à la pression du passage d'échappement (11) et
lorsqu'il est déterminé par un moyen de détermination qu'une période d'ouverture de soupape d'admission cible (θᵢₒ) est inférieure à une période de fermeture de soupape d'échappement cible (θ_{ec}), c'est-à-dire, lorsqu'il est déterminé que le chevauchement est formé pendant les périodes d'ouverture de la soupape d'admission (7) et de la soupape d'échappement (12),
dans la condition, la pression de carburant cible (P_{obj}) est réglée comme une valeur de pression (P_{blow}), qui est supérieure à une pression de carburant (P_{noblow}) dans une condition dans laquelle le carburant n'est pas insufflé dans l'orifice d'échappement (P_{blow}>P_{noblow}), et
un rapport d'injection de course d'admission cible (Rᵢₙ) est réglé comme une valeur de rapport (R_{blow}), qui est supérieure à un rapport d'injection de course d'admission (R_{noblow}) d'une condition dans laquelle le carburant n'est pas insufflé dans l'orifice d'échappement (R_{blow}>R_{noblow}).

2. Moteur à combustion interne selon la revendication 1, comprenant en outre :
un dispositif de commande de soupape qui commande au moins un moment choisi où une soupape d'échappement (12) est fermée et un moment choisi où une soupape d'admission (7) est ouverte,
dans lequel le dispositif de commande d'injection (72) actionne le premier moyen d'injection (73) après la fermeture de la soupape d'échappement (12), dans un état dans lequel la soupape d'admission (7) est commandée pour être ouverte avant la fermeture de la soupape d'échappement (12) par le dispositif de commande de soupape.

3. Moteur à combustion interne selon l'une quelconque des revendications 1 à 2,
dans lequel le dispositif de commande d'injection règle une période d'injection de carburant de l'injecteur (10) de sorte que le carburant n'est pas insufflé à l'intérieur du passage d'échappement dans un état dans lequel un air d'admission est mis sous pression.

4. Moteur à combustion interne selon l'une quelconque des revendications 1 à 3, comprenant en outre :
un détecteur de pression de carburant qui détecte une pression de carburant,
dans lequel le dispositif de commande d'injection (72) règle une quantité d'injection du carburant sur la base d'une pression de carburant actuelle qui est détectée par le détecteur de pression de carburant.
